# EUROPÄISCHE PATENTSCHRIFT

(11) **EP 0 850 003 B1**
(45) Veröffentlichungstag und Bekanntmachung des Hinweises auf die Patenterteilung: **20.03.2002**
(21) Anmeldenummer: 96930073.0
(22) Anmeldetag: 22.08.1996
(51) Int. Cl.: A46D 1/00, D01F 1/10

(54) **BORSTEN MIT OBERFLÄCHENSTRUKTUR, VERFAHREN ZU IHRER HERSTELLUNG UND DARAUS HERGESTELLTE BÜRSTE ODER INTERDENTALREINIGER**
SURFACE-STRUCTURED BRISTLES, PROCESS FOR PRODUCING THE BRISTLES AND A BRUSH OR INTERDENTAL CLEANING DEVICE MADE FROM THE BRISTLES
SOIES STRUCTUREES EN SURFACE, PROCEDE PERMETTANT DE LES PRODUIRE ET BROSSE OU DISPOSITIF DE NETTOYAGE INTERDENTAIRE OBTENU A L'AIDE DESDITES SOIES

(30) Priorität: 15.09.1995 DE 19534368
(43) Veröffentlichungstag der Anmeldung: 01.07.1998
(73) Patentinhaber: Pedex & Co. GmbH, 69483 Wald-Michelbach (DE)
(72) Erfinder: WEIHRAUCH, Georg, D-69483 Wald-Michelbach (DE)
(74) Vertreter: Dipl.-Ing. Heiner Lichti Dipl.-Phys. Dr.rer.nat. Jost Lempert Dipl.-Ing. Hartmut Lasch
(86) Internationale Anmeldenummer: EP9603690
(87) Internationale Veröffentlichungsnummer: WO9709906

(56) Entgegenhaltungen:
- FR-A- 2 450 580
- DATABASE WPI Week 7616 3.Mai 1976 Derwent Publications Ltd., London, GB; AN 76-29083X XP002021222 & JP 51 026 314 A (KURARAY) , 3.April 1976
- DATABASE WPI Week 7242 Derwent Publications Ltd., London, GB; AN 72-67831t XP002021223 & JP 47 040 885 B (UNITIKA) , 12.Dezember 1972

## Beschreibung

Die Erfindung betrifft Borsten mit Oberflächenstruktur und ein Verfahren zur Herstellung oberflächenstrukturierten Borstenmaterials aus Kunststoff durch Extrudieren eines Monofils. Darüber hinaus betrifft die Erfindung eine Bürste, insbesondere eine Zahnbürste oder einen Interdentalreiniger, die bzw. der zumindest teilweise mit den oberflächenstrukturierten Borsten ausgerüstet ist.

Obwohl die Erfindung im folgenden im Zusammenhang mit Borsten und Borstenmaterial beschrieben wird, sind auch Monofile ausdrücklich mitumfaßt, die sich zu Geweben, Matten, Filtern etc. verarbeiten lassen. Des weiteren kann die Erfindung auch bei Pinseln, Polier- und Schleifpads oder Reinigungs-, Applikations-, Polier- oder Schleifgeräten Anwendung finden.

Borsten aus Kunststoff, die extrudiert werden, sind auf ihrer Oberfläche herstellungsbedingt üblicherweise glatt. Derartige Borsten entfalten bei Bürstenwaren beliebiger Art ihre Bürstwirkung zunächst und vornehmlich durch die freien Enden der Borsten, die die verschmutzte Fläche aufreißen und durch Kratzen und Schaben den Schmutz entfernen. Bei stärkerem Andruck legen sich die Borsten um und werden mit ihrer Mantelfläche wirksam. Sie gleiten mehr streichend und schiebend über die Oberfläche mit einer schonenderen Wirkung. Auch beim Auftragen von Farbe etc. mittels eines Pinsels werden die Borsten gekrümmt, so daß sie nicht nur mit ihren freien Borstenenden, sondern auch mit ihrer Mantelfläche mit der zu behandelnden Oberfläche in Anlage kommen. Seit längerer Zeit gibt es deshalb Überlegungen, die Mantelfläche der Borsten mit zur Oberflächenbehandlung heranzuziehen, indem sie strukturiert bzw. profiliert wird.

Aus der DD-PS 32963 sowie der US-2 642 705 ist es bekannt, auf der Mantelfläche von Borsten bzw. eines Borstenmaterials Abrasivteilchen aufzubringen, indem sie in das oberflächig aufgeschmolzene Borstenmaterial eingebettet werden. Ein derartiges Vorgehen ist nicht nur sehr aufwendig, sondern es hat sich des weiteren gezeigt, daß sich die außenliegenden Abrasivteilchen insbesondere infolge einer bei Benutzung der Borsten auftretenden Biegung lockern können. Darüber hinaus sind derartige Borsten derart abrasiv und somit aggressiv, daß ihre Verwendung in allen Fällen der menschlichen Zahn- und Körperpflege nicht möglich ist.

Aus der bereits genannten US-PS 2 642 705, der GB-PS 1 327 329 und insbesondere der DE-OS 20 37 674 ist es bekannt, Abrasivteilchen in das Kunststoff-Material der Borsten einzumischen. Dabei finden gemäß der DE-OS 20 37 674 anorganische Abrasivteilchen aus Aluminiumoxyd, zerhackten Glasfasern, Asbestteilchen oder keramischem Material oder auch in Form von Diamantteilchen Verwendung, die eine wesentlich größere Härte als das umgebende Kunststoff-Material besitzen, so daß sich eine sehr starke Schleifwirkung ergibt, die in vielen Anwendungsfällen unerwünscht ist. In vielen Fällen werden die Abrasivteilchen in einem derart hohen prozentualen Anteil eingebaut, daß sie auch die Borstenoberfläche tangieren bzw. durchdringen. Darüber hinaus zeigt die Erfahrung zeigt, daß derartige eingebettete Abrasivteilchen im Laufe der Zeit infolge einer Abnutzung an der Oberfläche der Borste freigelegt werden, wodurch die Abrasivität der Borsten deutlich erhöht wird, so daß für diese Borsten der Einsatz für die menschliche Zahn- oder Körperpflege nicht möglich ist, da damit erhebliche Gefahren einer Beschädigung der Haut, der Zähne oder der Schleimhäute eines Benutzers verbunden wären. Um beispielsweise Zahnbelag von Zähnen oder Schmutz von Fußböden oder Straßen zu entfernen, bedarf es weniger einer Schleifwirkung durch Abrasivmaterial als vielmehr einer sogenannten Räumwirkung, was durch eine Oberflächenstruktur bzw. Topographie erreicht werden könnte. Bei der Einmischung von Abrasivteilchen kann eine derartige Oberflächenstruktur nur bei Verwendung relativ großer Teilchen erreicht werden. Zwar sind die Räumeigenschaften einer derartigen Borste ausreichend, jedoch bringen die auf der Oberfläche vorstehenden großen Abrasivteilchen gleichzeitig auch eine hohe Abrasivität. Des weiteren werden die Borsten durch die Einlagerung der großen Abrasivteilchen stark geschwächt, so daß die Borsten eine nur unzureichende Festigkeit besitzen.

Es ist des weiteren bekannt, die Oberfläche von Borsten mechanisch aufzurauhen, indem die Borstenflanken mit einem Werkzeug strukturiert werden (US-PS 3 325 845, US-PS 3 229 347). Das Aufrauhen der Borstenflanken kann mittels einer Schleifeinrichtung oder auch durch Sandstrahlen erfolgen. Dabei ergibt sich jedoch der Nachteil, daß die in den Borsten längsorientierten Moleküle aufgerissen und die Borsten dadurch geschwächt werden. Des weiteren ist dieses Vorgehen sehr aufwendig. Die Oberflächen werden nach der Bearbeitung fransig und faserig, wodurch die Gefahr gegeben ist, daß sich Teile des Borstenmaterials lösen. Es hat sich gezeigt, daß auf diese Weise die Erzielung einer definierten Oberflächentopographie nicht möglich ist.

Aus der FR-A-2 450 580, von der als nächstkommender Stand der Technik ausgegangen wird, ist es bekannt, die Borsten zur Erhöhung der Speicherfähigkeit von Flüssigkeit mit wulstförmigen oder perlenartigen Verdickungen und zusätzlich mit in Längsrichtung der Borste verlaufenden Rillen zu versehen. Dies wird dadurch erreicht, daß das Monofil vor seiner endgültigen Verstreckung einem Waschprozeß unterworfen wird. Auch hierbei läßt sich eine definierte Oberflächentopographie nicht erreichen.

In der EP-0 360 938 A1 wird vorgeschlagen, in das Borstenmaterial ein Blähmittel einzubetten und durch Aufschäumen des Blähmittels eine Oberflächenrauhigkeit zu erzielen. Die sich im gesamten Borstenstrang bildenden Kammern bzw. Blasen führen jedoch zu einer wesentlichen Reduzierung der Borstensteifigkeit. Darüber hinaus ist die Borstenoberfläche aufgrund der aufgerissenen Blasen ungleichmäßig und besitzt keine definierte Strukturtiefe bzw. Topographie, wie sie für ein effektives Räumen notwendig ist.

Der Erfindung liegt die Aufgabe zugrunde, eine Borste bzw. ein Borstenmaterial zu schaffen, die bzw. das eine vorbestimmte Oberflächentopographie mit vorbestimmter oder nur geringer Abrasivität, jedoch erhöhter Räumwirkung besitzt. Des weiteren soll ein Verfahren zur Herstellung von Borstenmaterial geschaffen werden, mit dem entsprechende Borsten in einfacher Weise herstellbar sind.

Hinsichtlich des Verfahrens wird diese Aufgabe dadurch gelöst, daß einem thermisch aufgeschmolzenen, die Hauptkomponente des extrudierten Monofils bildenden 1 Kunststoff-Material vor oder während des Extrudierens ein Granulat aus einem 2. Kunststoff-Material beigemischt wird, das eine höhere thermische Festigkeit als das 1. Kunststoff-Material besitzt. Bei der Verwendung von thermoplastischem Werkstoff als 2. Kunststoff-Material besitzt dieses einen höheren Schmelzpunkt. Wenn alternativ ein anderes Kunststoff-Material verwendet wird, muß sichergestellt sein, daß sich dieses nicht oder zumindest nicht eher als das 1. Kunststoff-Material verflüssigt. Die Korngröße des Granulats ist dabei so bemessen, daß das Monofil bei einem nachfolgenden Verstrecken in Querschnitten, in denen wenig oder kein Granulat angeordnet ist, einer stärkeren Querschnittsverringerung bzw. Querkontraktion unterliegt als in Querschnitten mit viel Granulat. Das Granulat dient dabei nicht als Abrasivteilchen, sondern lediglich als Form- oder Widerstandskörper, um die Querkontraktion lokal zu behindern.

Bei dem erfindungsgemäßen Verfahren wird das 1. Kunststoff-Material, bei dem es sich in bekannter Weise um Polyamid, Polyester, Polyolefin oder ähnliches handeln kann, in einer Extrudervorrichtung erwärmt und dadurch fließfähig gemacht. Dann wird bei oder vor dem Extrudieren das Granulat aus dem 2. Kunststoff-Material in einer Menge von vorzugsweise 5 % bis 30 % des Gesamtgewichts des Borstenmaterials beigemischt. Die Abmessungen der Granulatkörner und deren Form hängen von der gewünschten Oberflächenstruktur ab. Die Abmessungen können schwanken, sollten jedoch nicht zu klein gewählt werden. In vorzugsweiser Ausgestaltung der Erfindung ist vorgesehen, daß die Größe eines Granulatkorns zwischen 10 % und 50 % des Durchmessers des Borstenmaterials beträgt.

Da das 2. Kunststoff-Material des Granulats eine höhere thermische Festigkeit bzw. einen höheren Schmelzpunkt als das die Hauptkomponente bildende 1. Kunststoff-Material besitzt, kann erreicht werden, daß es infolge der Wärme des 1. Kunststoff-Materials nicht oder allenfalls oberflächig aufschmilzt, so daß die Granulatkörner bei der Extrusion als in sich feste Einschlüsse in dem fließfähigen 1. Kunststoff-Material enthalten sind.

Gemäß der Erfindung besteht auch das Granulat aus Kunststoff. Damit ist der Vorteil verbunden, daß sich das Granulat in einfacher Weise herstellen läßt, indem beispielsweise ein extrudiertes Monofil hergestellt und in gewünschter Weise abgelängt wird. Dabei hat es sich bewährt, die Länge des Granulatkorns entweder gleich oder länger als den Durchmesser des Monofils zu wählen. Alternativ dazu ist es jedoch auch möglich, das Granulat durch Mahlen von Kunststoff herzustellen. Zur Erzielung einer relativ gleichmäßigen Korngröße kann das Granulat in üblicher Weise durch einen Siebvorgang sortiert werden.

Es hat sich als vorteilhaft herausgestellt, daß Granulat zu entgraten. Insbesondere bei den durch Ablängen eines Monofils hergestellten Granulaten treten relativ scharfe Kanten auf, die beim Borstenverschleiß nach außen treten könnten. Durch das Entgraten werden diese scharfen Kanten beseitigt. Das Entgraten kann auf thermische und/oder auf mechanische Weise erfolgen. Beim thermischen Entgraten wird das Granulat oberflächlich angeschmolzen, so daß die scharfen Kanten verlaufen. Alternativ ist es möglich, das Granulat vor dem Beimischen zu dem 1. Kunststoff-Material in Trommeln oberflächlich zu bearbeiten und dadurch die Kanten zu entfernen.

Es hat sich gezeigt, daß als Granulat auch solche höher temperaturbeständigen Kunststoffe verwendet werden können, die aufgrund ihrer molekularen Struktur bisher für die Borstenherstellung nicht eingesetzt werden konnten, da die technischen Werte des erfindungsgemäß hergestellten Borstenmaterials nur sekundär von dem Material des Granulats abhängig sind.

Wenn das 1. Kunststoff-Material mit beigemischtem Granulat durch die Düse des Extruders gepreßt und das austretende Monofil mit einer Geschwindigkeit abgezogen wird, die höher als die Austrittsgeschwindigkeit aus der Düse ist, erfolgt eine erste Verstreckung des Monofils. Die Zugkräfte sind jedoch nur in dem 1. Kunststoff-Material wirksam, da die Granulatkörner im wesentlichen frei beweglich in diesem enthalten sind. Durch die Verstreckung werden die geknäuelten Moleküle des 1. Kunststoff-Materials längsorientiert und der Durchmesser des Monofils durch Querkontraktion verringert. Die Durchmesserverringerung erfolgt jedoch nicht gleichmäßig über die Länge, sondern die Granulatkörner behindern die Querkontraktion, so daß im Bereich eines Granulatkorns eine geringere Querschnittsverringerung auftritt als in Bereichen, in denen kein Granulatkorn angeordnet ist. Die Verstreckung führt somit zu einer Oberflächenstruktur des Monofils.

Das noch fließfähige Monofil mit Oberflächenstruktur wird anschließend in bekannter Weise abgekühlt, wodurch eine Verfestigung erreicht wird. Vorzugsweise wird das Monofil anschließend einer weiteren Streckung ausgesetzt, die zu einer Dehnung auf eine vielfache Länge und insbesondere zu einer weiteren Durchmesserverringerung führt. Dabei werden die längsorientierten Moleküle des 1. Kunststoff-Materials nicht zerstört. Abschließend kann eine Stabilisierung des Monofils bzw. des Borstenmaterials in üblicher Weise erfolgen.

Wenn in Weiterbildung der Erfindung die Abrasivität des 2. Kunststoff-Materials des Granulats maximal so hoch ist wie die des 1. Kunststoff-Materials, ist zuverlässig verhindert, daß die Abrasivität des Borstenmaterials davon abhängig ist, ob und gegebenenfalls in welchem Umfang Granulatkörner auf der Mantelfläche des Monofils angeordnet sind oder zur Wirkung kommen. Selbst wenn die Borstenflanke bzw. Mantelfläche im Laufe der Zeit abnutzen und dadurch die Granulatkörner die Mantelfläche tangieren sollten, besitzt die Borste maximal die gleiche Abrasivität wie das die Hauptkomponente bildende 1. Kunststoff-Material.

In vorzugsweiser Ausgestaltung der Erfindung ist vorgesehen, daß das Granulat in das 1. Kunststoff-Material eingebettet und von diesem im wesentlichen vollständig überdeckt wird. Dies wird dadurch erreicht, daß das Granulat durch das 1. Kunststoff-Material im Extruder derart benetzt wird, daß es bei Austritt durch die Düse von dem Kunststoff-Material überwiegend abgedeckt ist. Somit weist das Monofil eine Mantelfläche auf, die im wesentlichen vollständig von dem 1. Kunststoff-Material gebildet ist.

Es hat sich gezeigt, daß die durch die bereichsweise unterschiedliche Querkontraktion hervorgerufene Oberflächentopographie von der Form der Granulatkörner abhängig ist und sich an diese anlehnt. Das Granulat kann zur Erzielung unterschiedlicher Topographien kugelförmig, quaderförmig oder prismenförmig ausgebildet sein oder eine Mischung von Körnern unterschiedlicher Form enthalten.

Wie bereits erwähnt, kann vorgesehen sein, das Granualat bei dem Extrudiervorgang nicht aufzuschmelzen, so daß die Körner einen in sich festen, formstabilen Einschluß in dem 1. Kunststoff-Material bilden. Alternativ dazu ist es auch möglich, das aus Kunststoff bestehende Granulat bei dem Extrudieren oberflächig aufzuschmelzen, so daß es mit dem umgebenden 1. Kunststoff-Material eine feste Verbindung eingeht und oberflächig verschweißt wird. Dabei muß jedoch sichergestellt sein, daß das Granulat nicht vollständig aufschmilzt, da es sich ansonsten mit dem 1. Kunststoff-Material vermischt. Durch das oberflächige Aufschmelzen kann andererseits ein Entgraten erreicht werden.

Für das 1. und das 2. Kunststoff-Material werden vorzugsweise Materialkombinationen aus thermoplastischem Kunststoff verwendet, die gut miteinander verschweißen. Es hat sich insbesondere bei Zahnbürsten bewährt, für das 1. Kunststoff-Material der Borsten Nylon 6.12 mit einem Granulat aus Polyphenylensulfid zu kombinieren. Besonders vorteilhaft hat sich dabei die Schmelzpunktdifferenz zwischen Nylon 6.12 (218°C) und Polyphenylensulfid (260°C) erwiesen.

Sowohl das 1. Kunststoff-Material als auch das 2. Kunststoff-Material des Granulats kann mit Füllstoffen gefüllt oder ungefüllt sein.

Es hat sich gezeigt, daß die Oberflächenstrukturierung am besten sichtbar ist, wenn dem 1. Kunststoff-Material relativ wenig Granulat beigemischt wird. Andererseits nimmt hierdurch jedoch die Abrasivität aufgrund der geringen Anzahl von Oberflächenerhebungen ab. Die Abrasivität läßt sich in diesem Fall wieder steigern, indem dem 1. Kunststoff-Material Füllstoffe zugegeben werden. Auf diese Weise läßt sich eine leicht abrasiv gefüllte Borste mit guter Oberflächenstruktur erzielen.

Bei bestimmten Anwendungsfällen kann es sinnvoll sein, daß das Granulat aus einem Material besteht, das härter als das 1. Kunststoff-Material ist. In diesem Fall wird die Bildung der Oberflächenstruktur vorteilhaft unterstützt und nachhaltig erhalten. Alternativ dazu ist es jedoch auch möglich, daß das Granulat aus einem Material besteht, das weicher als das 1. Kunststoff-Material ist. Dadurch entsteht eine nachgiebigere Oberflächenstruktur, wie sie insbesondere bei Vorrichtungen zur Behandlung empfindlicher Bereiche, beispielsweise des Zahnfleisches oder der Zahnzwischenräume sinnvoll ist. Zu diesem Zweck ist es möglich, daß das Granulat aus einem gummiähnlichen Material besteht.

Für bestimmte Einsatzgebiete muß sichergestellt sein, daß ein Benutzer erfindungsgemäße Borsten, die eine Räumwirkung mit sich bringen, als solche erkennt und diese nicht irrtümlicherweise verwendet. Dies kann in Weiterbildung der Erfindung dadurch erreicht werden, daß das 1. Kunststoff-Material transparent oder transluzent ausgebildet wird. Somit kann der Benutzer das abgedeckte Granulat, das vorzugsweise eine andere Farbe als das 1. Kunststoff-Material besitzt, durch das 1. Kunststoff-Material hindurch wahrnehmen. Auch zur Visualisierung eventuell in Form, Größe und Wirkung unterschiedlicher Granulattypen können diese in unterschiedlichen Farben in das transparente oder transluzente 1. Kunststoff-Material eingebettet werden.

Hinsichtlich der Borste wird die oben genannte Aufgabe dadurch gelöst, daß die Borste aus einem die Hauptkomponente bildenden 1. Kunststoff-Material besteht, in das ein Granulat aus einem 2. Kunststoff-Material in im wesentlichen vollständig überdeckter Weise eingebettet ist, wobei das Granulat auf der Oberfläche der Borste eine Strukturierung bildet. Auch hierbei kann vorgesehen sein, daß die Abrasivität des 2. Kunststoff-Materials des Granulats maximal der des 1. Kunststoff-Materials entspricht. Mit derartigen Borsten werden die gewünschten Massage- und Reinigungswirkungen nicht durch den Füllstoff bzw. das Granulat, sondern durch die sich aus der Granulatdimensionierung ergebenden Oberflächenstrukturen der Borsten bestimmt. Weitere Merkmale und Vorteile entsprechender Borsten ergeben sich aus der obigen Beschreibung des Verfahrens. Auch ein Monofil, wie es beispielsweise bei einigen Interdentalreinigern verwendet wird, kann die genannten Merkmale und Vorteile besitzen.

Die Borsten bzw. das Monofil können eine beliebige Querschnittsform besitzen und insbesondere rund, oval, dreieckig, viereckig, sternförmig etc. sein.

Des weiteren betrifft die Erfindung eine Bürste, insbesondere eine Zahnbürste oder einen Interdentalreiniger, mit einer Vielzahl von gegebenenfalls zu Bündeln zusammengefaßten Borsten, wobei zumindest einige der Borsten erfindungsgemäß ausgestaltet sind. Um eine Bürste in ihrer Wirkung an vorgegebene Rahmenbedingungen anpassen zu können, lassen sich die erfindungsgemäßen Borsten auch mit Borsten anderer Konfiguration kombinieren und zusammen verarbeiten. Es sind auch Interdentalreiniger bekannt, die aus nur einem Monofil bestehen. Die Erfindung soll auch derartige Interdentalreiniger umfassen, bei denen das Monofil erfindungsgemäß ausgestaltet ist.

Neben den genannten Bürsten läßt sich die Erfindung auch bei Pinseln zur Erzielung eines verbesserten Farbhaltevermögens, bei Haarbürsten für ein gutes Reinigungs- und Entfettungsvermögen, bei Massagebürsten mit besserer Rubbelwirkung, bei hand- und maschinenbetriebenen Besen zu erhöhter Schmutzaufnahme, bei Pads zum Polieren und Schleifen mit einem höheren Wirkungsgrad durch Oberflächentopographie sowie bei gewebten, geflochtenen oder in sonstiger Weise aus Borsten oder Monofilen hergestellten Matten, Reinigungsgeräten, Applikatoren, Polier- oder Schleifgeräten einsetzen. Des weiteren läßt sich die Erfindung bei einem Filter verwirklichen, das aufgrund der Strukturierung eine vergrößerte Monofiloberfläche besitzt.

Im folgenden wird die Erfindung anhand eines Ausführungsbeispiels unter Bezugnahme auf die Figuren 1 bis 3 erläutert. Es zeigen:
- Figur 1:: ein Monofil nach dem Extrudieren im Längsschnitt,
- Figur 2:: das Monofil nach dem Vorverstrecken und
- Figur 3:: das Monofil nach dem weiteren Verstrecken.

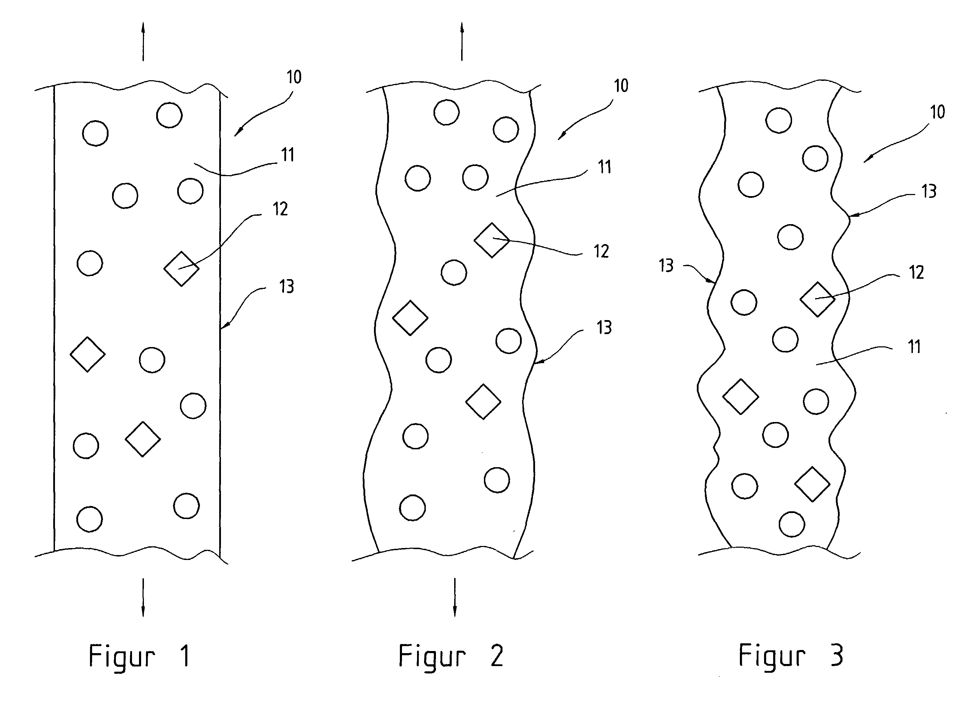

Wie in Figur 1 gezeigt ist, besitzt ein Monofil 10 unmittelbar nach dem Austritt aus der Extruderdüse einen im wesentlichen über die Länge gleichmäßigen Querschnitt mit glatter Mantelfläche 13, wobei in ein die Hauptkomponente des Monofils 10 bildendes 1. Kunststoff-Material 11 mehrere Granulatkörner 12 aus einem 2. Kunststoff-Material in unregelmäßiger Anordnung eingebettet sind. Bei dem dargestellten Beispiel besitzen die Granulatkörner 12 teilweise eine Kugel- und teilweise eine Quaderform. Das 1. Kunststoff-Material 11 ist fließfähig, während die Granulatkörner 12 feste, in sich stabile Einschlüsse bilden. Das Monofil wird nach Austritt aus der Extruderdüse vorverstreckt (siehe Pfeile in Figur 1), wodurch es einer Querschnittsverringerung infolge Querkontraktion unterliegt. Die Granulatkörner 12 behindern jedoch diese Querkontraktion bereichsweise, so daß Querschnitte, in denen kein Granulatkorn oder nur wenige Granulatkörner angeordnet sind, einer stärkeren Querkontraktion unterliegen als Querschnitte, in denen relativ viele Granulatkörner vorhanden sind. Dies führt zu einer über die Länge des Monofils ungleichmäßigen, variierenden Querschnittsform und -größe so daß sich außenseitig auf der Mantelfläche 13 eine Strukturierung bildet, wie in Figur 2 dargestellt ist.

Nach einem Abkühlen wird das Monofil nochmals verstreckt (siehe Pfeile in Figur 2) und auf ein Vielfaches seiner bisherigen Länge gedehnt. Es kommt dabei zu einer weiteren Querschnittsverringerung infolge Querkontraktion, die wiederum durch die Granulatkörner behindert wird. Die sich dadurch verstärkende Strukturierung der Mantelfläche 13 des Monofils 10 ist in Figur 3 dargestellt. Dabei ist erkennbar, daß die sich bildende Oberflächentopographie von der Form des Granulatkorns abhängig ist. Bei Verwendung von kugeligem Granulat bilden sich wesentlich weichere Topographieformen als bei Verwendung beispielsweise von quaderförmigem Granulat.

## Patentansprüche

1. Verfahren zur Herstellung oberflächenstrukturierten Borstenmaterials aus Kunststoff durch Extrudieren eines Monofils, wobei einem thermisch aufgeschmolzenen, die Hauptkomponente des Monofils bildenden 1. Kunststoff-Material vor oder während des Extrudierens ein Granulat aus einem 2. Kunststoff-Material beigemischt wird, das eine höhere thermische Festigkeit als das 1. Kunststoff-Material besitzt, wobei die Korngröße des Granulats so bemessen ist, daß das Monofil bei einem nachfolgenden Verstrecken in Querschnitten, in denen wenig oder kein Granulat angeordnet ist, einer stärkeren Querkontraktion unterliegt als in Querschnitten mit viel Granulat.

2. Verfahren nach Anspruch 1, **dadurch gekennzeichnet, daß** die Abrasivität des 2. Kunststoff-Materials des Granulats maximal der des 1. Kunststoff-Materials entspricht.

3. Verfahren nach Anspruch 1 oder 2, **dadurch gekennzeichnet, daß** das Monofil nach einem Verstrecken abgekühlt und anschließend weiterverstreckt und stabilisiert wird.

4. Verfahren nach einem der Ansprüche 1 bis 3, **dadurch gekennzeichnet, daß** das Granulat in einer Menge von 5 % bis 30 % des Gesamtgewichts des Borstenmaterials beigemischt wird.

5. Verfahren nach einem der Ansprüche 1 bis 4, **dadurch gekennzeichnet, daß** die Stärke des Granulatkorns zwischen 10 % und 50 % des Durchmessers des Borstenmaterials beträgt.

6. Verfahren nach einem der Ansprüche 1 bis 5, **dadurch gekennzeichnet, daß** das Granulat in das 1. Kunststoff- Material eingebettet und von diesem im wesentlichen vollständig überdeckt wird.

7. Verfahren nach einem der Ansprüche 1 bis 6, **dadurch gekennzeichnet, daß** das Granulat aus kugeligen und/oder prismenförmigen Körnern besteht.

8. Verfahren nach einem der Ansprüche 1 bis 7, **dadurch gekennzeichnet, daß** das Granulat durch Ablängen von einem extrudierten Monofil hergestellt wird.

9. Verfahren nach einem der Ansprüche 1 bis 8, **dadurch gekennzeichnet, daß** das Granulat durch Mahlen von Kunststoff hergestellt wird.

10. Verfahren nach einem der Ansprüche 1 bis 9, **dadurch gekennzeichnet, daß** das Granulat entgratet wird.

11. Verfahren nach einem der Ansprüche 1 bis 10, **dadurch gekennzeichnet, daß** das Entgraten auf thermische und/oder mechanische Weise erfolgt.

12. Verfahren nach einem der Ansprüche 1 bis 11, **dadurch gekennzeichnet, daß** das Granulat bei dem Extrudieren nicht aufgeschmolzen wird.

13. Verfahren nach einem der Ansprüche 1 bis 11, **dadurch gekennzeichnet, daß** das Granulat bei dem Extrudieren oberflächig aufgeschmolzen wird.

14. Verfahren nach Anspruch 13, **dadurch gekennzeichnet, daß** das Granulat mit dem umgebenden 1. Kunststoff-Material oberflächig verschweißt wird.

15. Verfahren nach einem der Ansprüche 1 bis 14, **dadurch gekennzeichnet, daß** das 2. Kunststoff-Material des Granulats härter als das 1. Kunststoff-Material ist.

16. Verfahren nach einem der Ansprüche 1 bis 14, **dadurch gekennzeichnet, daß** das 2. Kunststoff-Material des Granulats weicher als das 1. Kunststoff-Material ist.

17. Verfahren nach einem der Ansprüche 1 bis 16, **dadurch gekennzeichnet, daß** das 1. Kunststoff-Material transparent oder transluzent ist.

18. Verfahren nach einem der Ansprüche 1 bis 17, **dadurch gekennzeichnet, daß** das 1. Kunststoff-Material und/oder das 2. Kunststoff-Material mit Füllstoffen gefüllt ist.

19. Borste mit Oberflächenstruktur aus einem die Hauptkomponente bildenden 1. Kunststoff-Material, **dadurch gekennzeichnet, daß** in das 1. Kunststoff-Material ein Granulat aus einem 2. Kunststoff-Material in im wesentlichen vollständig überdeckter Weise eingebettet ist, wobei das 2. Kunststoff-Material eine höhere thermische Festigkeit als das 1. Kunststoff-Material besitzt und das Granulat auf der Oberfläche der Borste eine durch deren Querkontraktion bedingte Strukturierung bildet.

20. Borste nach Anspruch 19, **dadurch gekennzeichnet, daß** die Abrasivität des 2. Kunststoff-Materials des Granulats maximal der des 1. Kunststoff-Materials entspricht.

21. Borste nach Anspruch 19 oder 20, **dadurch gekennzeichnet, daß** das Granulat in einer Menge von 5 % bis 30 % des Gesamtgewichts der Borste beigemischt ist.

22. Borste nach einem der Ansprüche 19 bis 21, **dadurch gekennzeichnet, daß** die Stärke des Granulatkorns zwischen 10 % und 50 % des Durchmessers der Borste beträgt.

23. Borste nach einem der Ansprüche 19 bis 22, **dadurch gekennzeichnet, daß** das Granulat aus kugeligen und/oder prismenförmigen Körnern besteht.

24. Borste nach einem der Ansprüche 19 bis 23, **dadurch gekennzeichnet, daß** das Granulat mit dem 1. Kunststoff-Material oberflächig verschweißt ist.

25. Borste nach einem der Ansprüche 19 bis 24, **dadurch gekennzeichnet, daß** das 2. Kunststoff-Material des Granulats härter als das 1. Kunststoff-Material ist.

26. Borste nach einem der Ansprüche 19 bis 24, **dadurch gekennzeichnet, daß** das 2. Kunststoff-Material des Granulats weicher als das 1. Kunststoff-Material ist.

27. Borste nach einem der Ansprüche 19 bis 26, **dadurch gekennzeichnet, daß** das 1. Kunststoff-Material transparent oder transluzent ist.

28. Bürste, insbesondere Zahnbürste oder Interdentalreiniger, mit einer Vielzahl von gegebenenfalls zu Bündeln zusammengefaßten Borsten, **gekennzeichnet durch** zumindest einige Borsten gemäß einem der Ansprüche 19 bis 27.

29. Interdentalreiniger mit einer einzelnen Borste gemäß der Ansprüche 19 bis 27.

## Claims

1. Method for the manufacture of surface-structured bristle material from plastic by extruding a monofilament, in which with a thermally melted first plastics material forming the main component of the monofilament is admixed, before or during extrusion, a granular material of a second plastics material, which has a higher thermal strength than that of the first plastics material, the particle size of the granular material being such that during subsequent stretching, in cross-sections where there is little or no granular material, the monofilament is subject to a greater transverse contraction than in cross-sections with a large amount of granular material.

2. Method according to claim 1, **characterized in that** the abrasiveness of the second plastics material of the granular material is at the most the same as that of the first plastics material.

3. Method according to claim 1 or 2, **characterized in that**, after stretching, the monofilament is cooled, then further stretched and stabilized.

4. Method according to one of the claims 1 to 3, **characterized in that** the granular material is admixed in a quantity of 5 to 30% of the total weight of the bristle material.

5. Method according to one of the claims 1 to 4, **characterized in that** the size of the granular material particles is between 10 and 50% of the diameter of the bristle material.

6. Method according to one of the claims 1 to 5, **characterized in that** the granular material is embedded in the first plastics material and is substantially completely covered by the latter.

7. Method according to one of the claims 1 to 6, **characterized in that** the granular material comprises spherical and/or prismatic particles.

8. Method according to one of the claims 1 to 7, **characterized in that** the granular material is produced by cutting to length from an extruded monofilament.

9. Method according to one of the claims 1 to 8, **characterized in that** the granular material is produced by grinding plastic.

10. Method according to one of the claims 1 to 9, **characterized in that** the granular material is deburred.

11. Method according to one of the claims 1 to 10, **characterized in that** deburring takes place thermally and/or mechanically.

12. Method according to one of the claims 1 to 11, **characterized in that** the granular material is not melted during extrusion.

13. Method according to one of the claims 1 to 11, **characterized in that** the granular material is surface-melted during extrusion.

14. Method according to claim 13, **characterized in that** the granular material is surface-welded to the surrounding first plastics material.

15. Method according to one of the claims 1 to 14, **characterized in that** the second plastics material of the granular material is harder than the first plastics material.

16. Method according to one of the claims 1 to 14, **characterized in that** the second plastics material of the granular material is softer than the first plastics material.

17. Method according to one of the claims 1 to 16, **characterized in that** the first plastics material is transparent or translucent.

18. Method according to one of the claims 1 to 17, **characterized in that** the first plastics material and/or the second plastics material is filled with fillers.

19. Bristle with a surface structure from a first plastics material forming the main component, **characterized in that** in the first plastics material is embedded in a substantially completely covered manner a granular material of a second plastics material, the second plastics material having a higher thermal stability than the first plastics material and the granular material forming a structuring on the surface of the bristles as a result of the transverse contraction thereof.

20. Bristle according to claim 19, **characterized in that** the abrasiveness of the second plastics material of the granular material at the most corresponds to that of the first plastics material.

21. Bristle according to claim 19 or 20, **characterized in that** the granular material is admixed in a quantity of 5 to 30% of the total weight of the bristle.

22. Bristle according to one of the claims 19 to 21, **characterized in that** the size of the granular material particle is between 10 and 50% of the bristle diameter.

23. Bristle according to one of the claims 19 to 22, **characterized in that** the granular material comprises spherical and/or prismatic particles.

24. Bristle according to one of the claims 19 to 23, **characterized in that** the granular material is surface-welded to the first plastics material.

25. Bristle according to one of the claims 19 to 24, **characterized in that** the second plastics material of the granular material is harder than the first plastics material.

26. Bristle according to one of the claims 19 to 24, **characterized in that** the second plastics material of the granular material is softer than the first plastics material.

27. Bristle according to one of the claims 19 to 26, **characterized in that** the first plastics material is transparent or translucent.

28. Brush, particularly toothbrush or interdental cleaner, with a plurality of bristles optionally combined into bundles, **characterized by** at least some bristles according to one of the claims 19 to 27.

29. Interdental cleaner with a single bristle according to claims 19 to 27.

## Revendications

1. Procédé de fabrication de poils synthétiques structurés en surface par extrusion d'un monofil, dans lequel on mélange avant ou pendant l'extrusion, à une première matière synthétique fondue par thermofusion formant le composant principal du monofil, un granulat constitué d'une deuxième matière synthétique présentant une résistance thermique supérieure à la première matière synthétique, la granularité du granulat étant déterminée de telle façon que lors d'une extension ultérieure, le monofil est soumis dans les sections dans lesquelles est disposé peu ou pas de granulat à une constriction plus importante que dans les sections comportant beaucoup de granulat.

2. Procédé selon la revendication 1, **caractérisé en ce que** le caractère abrasif de la deuxième matière synthétique du granulat correspond au mieux à celui de la première matière synthétique.

3. Procédé selon la revendication 1 ou 2, **caractérisé en ce que** le monofil est refroidi après extension et consécutivement à nouveau soumis à extension et stabilisé.

4. Procédé selon l'une quelconque des revendications 1 à 3, **caractérisé en ce que** le granulat est mélangé dans une proportion de 5 à 30 % du poids total des poils.

5. Procédé selon l'une quelconque des revendications 1 à 4, **caractérisé en ce que** l'épaisseur des granules du granulat représente environ 10 à 50 % du diamètre des poils.

6. Procédé selon l'une quelconque des revendications 1 à 5, **caractérisé en ce que** le granulat est noyé dans la première matière synthétique et sensiblement entièrement recouvert par celle-ci.

7. Procédé selon l'une quelconque des revendications 1 à 6, **caractérisé en ce que** le granulat est composé de granules sphériques et/ou prismatiques.

8. Procédé selon l'une quelconque des revendications 1 à 7, **caractérisé en ce que** le granulat est obtenu par tronçonnage d'un monofil extrudé.

9. Procédé selon l'une quelconque des revendications 1 à 8, **caractérisé en ce que** le granulat est obtenu par broyage de matière synthétique.

10. Procédé selon l'une quelconque des revendications 1 à 9, **caractérisé en ce que** le granulat est ébavuré.

11. Procédé selon l'une quelconque des revendications 1 à 10, **caractérisé en ce que** l'ébavurage est réalisé thermiquement et/ou mécaniquement.

12. Procédé selon l'une quelconque des revendications 11, **caractérisé en ce que** lors de l'extrusion le granulat n'est pas fondu.

13. Procédé selon l'une quelconque des revendications 1 à 11, **caractérisé en ce que** lors de l'extrusion le granulat est superficiellement fondu.

14. Procédé selon la revendication 13, **caractérisé en ce que** le granulat est solidarisé superficiellement à la première matière synthétique qui l'entoure.

15. Procédé selon l'une quelconque des revendications 1 à 14, **caractérisé en ce que** la deuxième matière synthétique du granulat est plus dure que la première matière synthétique.

16. Procédé selon l'une quelconque des revendications 1 à 14, **caractérisé en ce que** la deuxième matière synthétique du granulat est plus tendre que la première matière synthétique.

17. Procédé selon l'une quelconque des revendications 1 à 16, **caractérisé en ce que** la première matière synthétique est transparente ou translucide.

18. Procédé selon l'une quelconque des revendications 1 à 17, **caractérisé en ce que** la première matière synthétique et/ou la deuxième matière synthétique est remplie de matières de remplissage.

19. Poil à surface structurée réalisé dans une première matière synthétique formant le composant principal, **caractérisé en ce qu'**un granulat réalisé dans une deuxième matière synthétique est noyé dans la première matière synthétique de manière à ce que celle-ci la recouvre sensiblement entièrement, la deuxième matière synthétique présentant une résistance thermique supérieure à celle de la première matière synthétique, et le granulat formant à la surface du poil une structuration conditionnée par la constriction de celui-ci.

20. Poil selon la revendication 19, **caractérisé en ce que** le caractère abrasif de la deuxième matière synthétique du granulat correspond au mieux à celui de la première matière synthétique.

21. Poil selon la revendication 19 ou 20, **caractérisé en ce que** l'épaisseur des granules du granulat représente environ 10 à 50 % du diamètre du poil.

22. Poil selon l'une quelconque des revendications 19 à 21, **caractérisé en ce que** l'épaisseur des granules du granulat représente environ 10 à 50 % du diamètre du poil.

23. Poil selon l'une quelconque des revendications 19 à 22, **caractérisé en ce que** le granulat est composé de granules sphériques et/ou prismatiques.

24. Poil selon l'une quelconque des revendications 19 à 23, **caractérisé en ce que** le granulat est solidarisé superficiellement à la première matière synthétique.

25. Poil selon l'une quelconque des revendications 19 à 24, **caractérisé en ce que** la deuxième matière synthétique du granulat est plus dure que la première matière synthétique.

26. Poil selon l'une quelconque des revendications 19 à 24, **caractérisé en ce que** la deuxième matière synthétique du granulat est plus tendre que la première matière synthétique.

27. Poil selon l'une quelconque des revendications 19 à 26, **caractérisé en ce que** la première matière synthétique est transparente ou translucide.

28. Brosse, en particulier brosse à dents ou instrument de nettoyage interdentaire, comportant un grand nombre de poils le cas échéant réunis en faisceaux, **caractérisée en ce que** quelques poils au moins sont réalisés conformément à l'une des revendications 19 à 27.

29. Nettoyeur interdentaire comprenant un seul poil réalisé conformément aux revendications 19 à 27.
